(19) Europäisches Patentamt
European Patent Office
Office européen des brevets

(11) **EP 0 799 631 B1**

(12) **EUROPÄISCHE PATENTSCHRIFT**

(45) Veröffentlichungstag und Bekanntmachung des Hinweises auf die Patenterteilung:
**29.09.1999 Patentblatt 1999/39**

(51) Int. Cl.$^6$: **B01D 21/24**

(21) Anmeldenummer: **97107284.8**

(22) Anmeldetag: **02.05.1997**

(54) **Abflussregelvorrichtung**

Discharge regulator

Régulateur d'écoulement

(84) Benannte Vertragsstaaten:
**AT DE FR**
Benannte Erstreckungsstaaten:
**SI**

(30) Priorität: **07.05.1996 DE 19618186**

(43) Veröffentlichungstag der Anmeldung:
**08.10.1997 Patentblatt 1997/41**

(73) Patentinhaber:
**bgu-Umweltschutzanlagen GmbH**
**74626 Bretzfeld (DE)**

(72) Erfinder:
• **Feucht, Werner**
**74343 Sachsenheim (DE)**

• **Löbig, Hans-Dieter**
**74629 Pfedelbach (DE)**
• **Schlechtriem, Uwe**
**74246 Löwenstein-Hösslinsülz (DE)**

(74) Vertreter:
**Hössle, Markus, Dipl.-Phys. et al**
**Hössle & Kudlek**
**Patentanwälte**
**Moserstrasse 8**
**70182 Stuttgart (DE)**

(56) Entgegenhaltungen:
**DE-U- 1 688 276**

**Beschreibung**

Die Erfindung betrifft eine Abflußregelvorrichtung für gleichmäßige Abflußmengen aus einem Speicherbecken, mit einem vor einer Abflußöffnung im Becken verstellbaren Drosselorgan in Form eines Bogensegmentes, das mit einem Schwimmerarm eines variierenden Stauhöhen folgenden Schwimmers in Antriebsverbindung steht, wobei das Bogensegment im Bogenkrümmungsmittelpunkt und der Schwimmerarm auf einer gemeinsamen waagerechten Achse an einem Gestell gelagert sind und der Abflußöffnungsumfang durch einen sich mindestens bis zum Verstellweg des Bogensegmentes erstreckenden rechteckigen, am Gestell festen Mantel begrenzt ist.

Bei einer aus DE-U- 16 88 276 bekannten Abflußregelvorrichtung der vorbezeichneten Art enthält die Abflußöffnung in Form eines waagerechten Schlitzes in der Beckenwand eine sägeblattartig gezackte Schlitzunterkante. Die Öffnungsweite des Schlitzes kann durch ein im Querschnitt bogenförmig gekrümmtes Drosselblech mit gezackter Unterkante verändert werden. Das Drosselblech ist mittels eines ersten Hebels um eine im Mittelpunkt des Krümmungsbogens ortsfeste waagerechte Achse schwenkbar gelagert. In Antriebsverbindung mit dem ersten Hebel steht ein zweiter Hebel, der einen veränderlichen Stauhöhen im Becken folgenden Schwimmer trägt. Um den Beckenabfluß konstant zu halten, wird bei zunehmender Stauhöhe der Querschnitt des Abflußschlitzes in dem Maße reduziert, um das die Druckhöhe am Abflußschlitz ansteigt. Durch verstellbare Ausgleichsgewichte an beiden Hebeln kann man die Abflußmenge und auch die niedrigste Stauhöhe verändern. Weitere Einstellmöglichkeiten sind vorhanden, indem man die Richtung der beiden Hebel zueinander verändert.

Zur Erfindung liegt die Aufgabe zugrunde, eine Abflußregelvorrichtung vorbezeichneter Art anzugeben, die eine kompakte niedrige Bauweise ermöglicht und deren Betrieb nur verhältnismäßig geringe Betätigungskräfte erfordert.

Diese Aufgabe ist erfindungsgemäß durch die kennzeichnenden Merkmale des Anspruchs 1 gelöst. - Die kompakte niedrige Bauweise wird durch das die Vorrichtung überdeckende Glockengehäuse begünstigt, in dem Stauhöhenänderungen des Beckens nach dem Gesetz von Boyle-Mariotte in verkleinertem, nichtlinearem Maßstab reproduziert und dadurch die Schwimmerbewegungen reduziert werden. Folglich ist nur ein kurzer Schwimmerarm erforderlich, dessen Schwenkbereich sich über geringe Höhenunterschiede erstreckt. Um beim Regeln gleichbleibender Abflußmengen alle vorkommenden Stauhöhen zu berücksichtigen, ist im oberen Verstellweg des Schwimmers eine auf diesen mit stufenlosem Übergang und entgegen der Aufriebskraft wirkende Federeinrichtung vorgesehen, die vorzugsweise als kostengünstige Blattfeder platzsparend im Glockengehäuse untergebracht und in Abstimmung mit den durch den übrigen Vorrichtungsaufbau vorgegebenen und nachstellbaren Parametern zur Aufrechterhaltung einer vom Beckenfüllstand unabhängigen gleichbleibenden Abflußmenge ausgewählt und justiert wird.

Wenn Schwimmerarm und Bogensegment auf einer gemeinsamen Achse gelagert, jedoch nur unter der Wirkung ihrer Eigengewichte miteinander verbunden sind, kann das Bogensegment vom Schwimmer richtungsabhängig mechanisch entkoppelt werden. Dies Freilaufmerkmal wird ausgenutzt, um bei Verstopfung des Abflußquerschnittes den auf grobe Schmutzstoffe wirkenden Wasserdruck mit horizontaler Kraftkomponente auf eine geeignet geformte Unterkante des Bogensegmentes zu übertragen und das Bogensegment kurzzeitig anzuheben. Die Verstopfung wird folglich selbsttätig erkannt, und das Bogensegment kann nach oben ausweichen, ohne den Schwimmer tiefer in das Wasser einzudrücken. Nachdem die Verstopfung freigespült worden ist, kehrt das Segment in seine von einem Anschlag am Schwimmerarm bestimmte Arbeitsstellung zurück.

Weiter Einzelheiten und Vorteile der Abflußregelvorrichtung nach der Erfindung ergeben sich aus der nachfolgenden Beschreibung eines Ausführungsbeispiels anhand der Zeichnungen. Es zeigen, jeweils schematisch in senkrechten Schnittdarstellungen,

Fig. 1   eine Übersicht der Abflußregelvorrichtung nach der Erfindung,

Fig. 2   die in ein Speicherbecken eingebaute Vorrichtung in verkleinertem Maßstab während Trockenwetter,

Fig. 3   die Vorrichtung wie in Fig. 2, jedoch in Regelstellung nach Ansprechen einer auf den Schwimmer wirkenden Federeinrichtung,

Fig. 4   die Vorrichtung wie in Fig. 3, jedoch mit aufgrund einer Verlegung momentan hochgeschwenktem Bogensegment, und

Fig. 5   eine Sollkurve für von Stauspiegeländerungen im Becken abhängige Abflußquerschnittsänderungen zwecks Konstanthaltung des Abflusses.

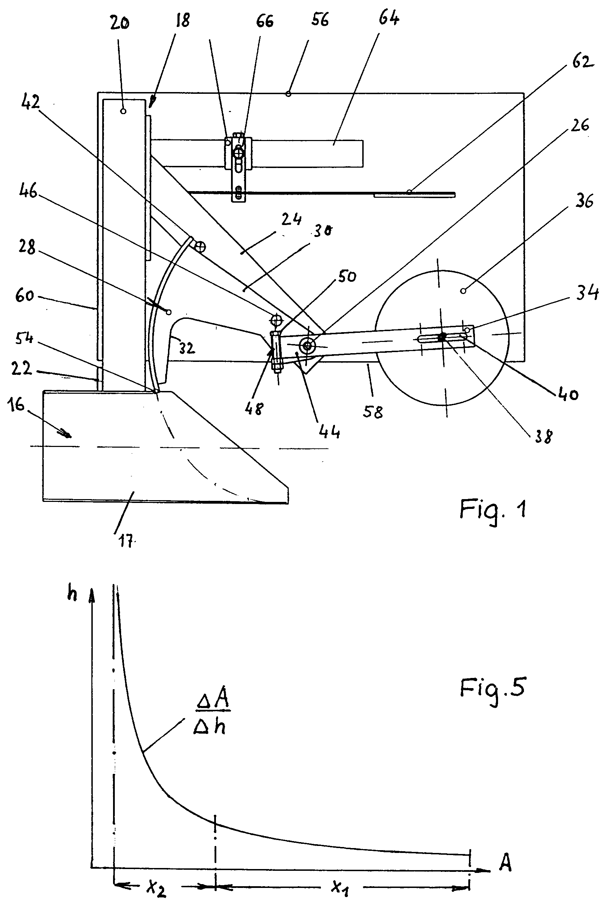

Entsprechend Fig. 1 bis 4 umfaßt die Erfindung einen die in einer Seitenwand 10 eines Speicherbeckens 12 unmittelbar über dem Beckenboden 14 angeordnete Abflußöffnung umfangsmäßig begrenzenden rechteckigen Mantel 16. Beiderseits des waagerechten Mantels 16 befinden sich senkrechte Tragteile 20 eines zum Vorrichtungsgestell 18 gehörenden Hauptrahmens, die mit einem am Mantel 16 befestigten senkrechten Flansch 22 verschweißt und über diesen durch Verschraubung an der Seitenwand 10 befestigt sind.

Von den durch nicht gezeigte Verstrebungen versteiften Tragteilen 20 gehen abwärts geneigte Tragarme 24 aus, an denen eine waagerechte Achse 26 befestigt ist, die zur senkrechten Querschnittsebene der Abflußöffnung parallel verläuft.

Auf der Achse 26 ist ein Bogensegment 28 drehbar gelagert, dessen senkrecht zur Zeichenebene verlaufende Breite mit Führungsspiel in den Abstand zwischen den beiden Seitenwänden 17 des Mantels 16 paßt. Das Drosselorgan besteht aus dem Bogensegment 28 und zwei an dessen konkaver Innenseite befestigten sektorförmigen Platten 30, die etwa im Krümmungsmittelpunkt des Bogensegmentes auf der Achse 26 schwenkbar gelagert sind. Die Platten 30 können nach unten offene Ausnehmungen 32 enthalten, die das Gesamtgewicht reduzieren. Auf der Achse 26 ist außerdem ein Schwimmerarm 34 gelagert, an dessen freiem Ende als Schwimmer 36 z.B. ein geschlossener Hohlzylinder mittels einer zentrischen Schraubverbindung 38 befestigt ist, die durch einen Längsschlitz 40 des Schwimmerarms 34 verstellbar ist, um den Hebelarm der am Schwimmer 36 wirkenden Gegengewichtskraft bzw. Auftriebskraft zu ändern.

In der in Fig. 1 und 2 gezeigten Grundstellung während einer staufreien Trockenwetterphase hält das rechts von der Achse 26 wirksame Gewicht vom Schwimmer und Schwimmerarm das Segment 28 in seiner durch einen Anschlag 42 begrenzten angehobenen Endstellung, in der es die Abflußöffnung freigibt. Die aus der Gewichtskraft resultierende Verstellbewegung im Uhrzeigersinn wird von einer über die Achse 26 hinausgehenden Verlängerung 44 des Schwimmerarms 34 auf einen an den Platten 30 befestigten Anschlag 46 übertragen.

Normalerweise erstrecken sich Schwimmerarm 34 und Segment 28 von der Achse 26 aus nach etwa entgegengesetzten Richtungen. Diese gegenseitige Ausrichtung kann durch einen dem Anschlag 46 zugeordneten verstellbaren Gegenanschlag 48 in Form einer Stellschraube 50 wahlweise z.B. dahingehend verändert werden, daß bei weiter aus der Verlängerung 44 nach oben herausragender Stellschraube 50 der Schwimmer 36 eine höher liegende Grundstellung hat und dadurch erst später bei angestiegenem Beckenfüllstand anspricht. Das Schwimmerverhalten kann durch Ballastflüssigkeit im Hohlzylinder beeinflußt werden.

Sobald der Schwimmer 36 bei ansteigender Beckenfüllung auftreibt, bewegt sich das Segment 28 nach unten drosselnd in den die Abflußöffnung umgrenzenden Mantel 16. In der Grundstellung (Fig. 1) befindet sich die waagerechte Segment-Unterkante unmittelbar hinter dem senkrecht zur Zeichenebene verlaufenden rückwärtigen Ende der Deckwand 54 des Mantels 16, um später in den Abstand zwischen dessen Seitenwänden 17 einzutauchen und die Abflußöffnung zu drosseln. - Obwohl sich Seitenwände und Boden des Mantels 16 beim gezeigten Beispiel über den Bogenweg des Segmentes hinausgehend in das Becken erstrecken, könnte ein breiteres Segment 28 während seiner Schwenkungen an entsprechend seinem Bogenweg ausgeformten Stirnkanten Von Seitenwänden und Boden des Mantels 16 mit Führungsabstand entlang bewegt werden.

Aufgrund des Schwimmerauftriebs verringert das Segment 28 den Abflußquerschnitt entsprechend den Steuervorgaben. Damit der Schwimmer 36 nicht dem großen Weg von Stauspiegeländerungen bis zur Beckenüberlaufkante folgen muß, werden diese Stauspiegeländerungen in einem nach dem Boyle-Mariotte-Gesetz wirkenden, den Schwimmer und alle aktiven Bauteile der Vorrichtung aufnehmenden Glockengehäuse 56 in verkleinertem, nicht linearem Maßstab proportional nachgebildet. Weil folglich die zur Regelung angewendete Getriebekinematik nur kurze Wege benötigt, kann die Regelvorrichtung kompakt und niedrig gebaut werden.

Entsprechend Fig. 1 überdeckt das etwa quaderförmige schlanke, nach unten offene Glockengehäuse 56 das Gestell 18 und die Getriebekinematik bis zu seiner waagerechten Unterkante 58. Zur Positionierung ist eine Seitenwand 60 des Glockengehäuses in den Schlitzabstand zwischen den senkrechten Tragteilen 20 des Gestells und der benachbarten Beckenseitenwand einsteckbar, worauf es zusätzlich fixiert wird, beispielsweise mit durch die Deckwand abgedichtet hindurchgeführten und in die Tragteile 20 eingedrehten Schrauben.

Die Regelmechanik ist in der Lage, die nichtlineare Eingangsfunktion der Stauspiegeländerung im Glockengehäuse 56 in eine nichtlineare Ausgangsfunktion umzusetzen, die der Änderung des Abflußquerschnittes in Abhängigkeit von Stauspiegeländerungen unter Berücksichtigung der Ausflußformel ($Q = \mu \cdot A\sqrt{2gh}$) entspricht. Mit Hilfe des Glockengehäuses 56, das ausgehend von seiner waagerechten Unterkante 58, anstelle einer Parallelepipedform mindestens eine mehr oder weniger oder unterschiedlich geneigte Seitenwand haben kann, lassen sich die im Glockengehäuse reproduzierten Stauspiegeländerungen beliebig beeinflussen bzw. auf eine jeweils angewendete Getriebekinematik abstimmen.

Zur verbesserten Anpassung der von der Schwimmerbewegung gelieferten Eingangsfunktion an die von der Unterkante des Segments 28 zu beschreibende Sollfunktion dient eine Federeinrichtung, deren Federkennlinie die angenäherte Kreisfunktion der Schwimmerbewegung überlagert. Entsprechend dem Schaubild in Fig. 5 ist die zum Konstanthalten der Abflußmenge erforderliche Sollfunktion des Abflußquerschnittes theoretisch in zwei Abschnitte unterteilt:

- Entlang des flachen Kurventeils über dem Abschnitt $x_1$, auf dem Änderungen der Beckenstauhöhe h große Änderungen des Abflußquerschnittes A erfordern, bewegt sich der Schwimmer 36 z.B. bei zunehmender Stauhöhe anfänglich linear, bis er die Unterkante der Glocke 56 erreicht. Bei weiter ansteigender Stauhöhe veranlaßt die aufgrund des Luftpolsters in der Glocke reduzierte Auftriebsbewegung des Schwimmers die von der Sollkurve gemäß Fig. 5 vorgegebene kleinere, nicht lineare Segmentverstellung.

- Entlang des steil ansteigenden Kurventeils über dem Abschnitt $x_2$, auf dem weitere Änderungen der Beckenstauhöhe zunehmend kleinere Änderungen des Abflußquerschnittes A erfordern, wird die Auftriebsbewegung des Schwimmers durch eine in Arbeitspunkt und Härte genau abgestimmte Feder, vorzugsweise Blattfeder 62 zusätzlich verzögert.

Die Blattfeder 62 ist entsprechend Fig. 1 mit ihrem freien Ende an einer Stelle im Schwenkweg des Schwimmers 36 angeordnet, die dem Übergangsbereich zwischen den beiden Kurventeilen $x_1$ und $x_2$ gemäß Fig. 5 entspricht. Die dem Schwimmerauftrieb entgegenwirkende Kraft der Feder 62 ist beim ersten Kontakt mit dem Schwimmer gering, um einen weitgehend stufenlosen Übergang im Regelverhalten der Vorrichtung zu erreichen.

Die Feder 62 kann in einer an dem vom Gestell 18 ausgehenden waagerechten Haltearm 64 angeordneten Verstelleinrichtung 66 eingespannt sein, durch die ihr Abstand vom Haltearm, die freie Federlänge und der Kontaktpunkt zwischen Feder und Schwimmer veränderbar sind.

Zur Optimierung und weitergehenden Annäherung des Regelverhaltens der Vorrichtung an eine für konstante Abflußmengen geltende Kurve gemäß Fig. 5 können der Kontaktpunkt der Feder 62 und der Einflußbeginn des Glockengehäuses 56 sowie sämtliche Absolut- und Relativwinkel zwischen den festen und beweglichen Getriebegliedern feinfühlig aufeinander abgestimmt werden. Um in diesem Zusammenhang nicht das gesamte Glockengehäuse 56 in der Höhe verstellen zu müssen, kann eine Seitenwand einen von der Unterkante 58 ausgehenden Ausschnitt enthalten, dessen Höhe durch eine abgedichtete, vertikal verstellbare Abdeckplatte verändert wird.

Da zwischen um die gemeinsame waagerechte Achse 26 schwenkbaren Schwimmerarm und Segment keine starre Verbindung besteht, kann das Segment 28 gegenüber dem Schwimmerarm 36 stets unabhängig in Aufwärtsrichtung bewegt werden. Wenn der geregelte Abflußquerschnitt durch grobe Schmutzteile verlegt oder reduziert ist, wird der aus dem Becken horizontal auf die Schmutzteile wirkende Druck des abfließenden Wassers genutzt, um über eine besonders geformte Unterkante des unbehindert aufwärts schwenkbaren Segmentes 28 ein Drehmoment auszuüben.

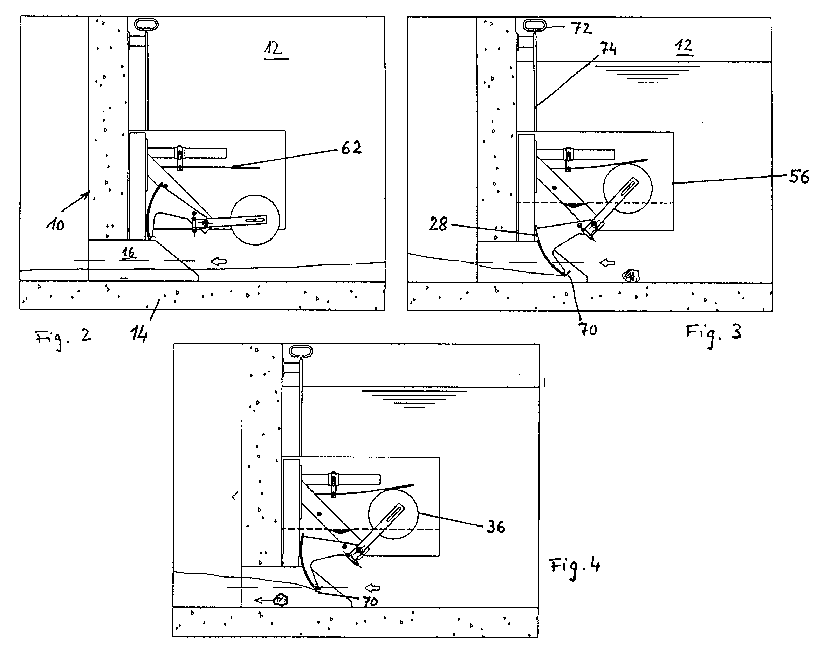

Ein an die Unterkante des Segmentes 28 angebrachter oder angeformter schmaler Segmentrand 70 etwa gemäß Fig. 3 bildet bei auf geringe Auslaßquerschnitte eingestelltem Segment mit dem Boden des Mantels 16 einen Winkel von ungefähr 45° und kann je nach Größe der Abflußöffnung eine Länge zwischen etwa 20 bis 50 mm haben. Bei dieser Ausbildung des Segmentrandes 70 bleibt die auf ihn wirkende Anströmkraft gering und kann durch Bemessung der Kraft der Federeinrichtung 62 und/oder anderer Parameter der Vorrichtung ohne Beeinträchtigung des beabsichtigten Regelverhaltens kompensiert werden. Zum freien Ende des Segmentrandes 70 gelangende grobe Schmutzteile (Fig. 3), die sich nicht an die Konkavseite des Segments anlegen können und ebenfalls angeströmt werden, üben auf den Segmentrand 70 eine ihrem großen Profil entsprechend erhöhte Schubkraft aus, so daß die Verstopfung selbsttätig beseitigt wird, indem das Segment 28 gemäß Fig. 4 nach oben ausweicht, ohne den Schwimmer 36 tiefer in das Wasser einzudrücken. Nachdem die Verstopfung freigespült worden ist, kehrt das Segment in seine durch den Anschlag 46 am Schwimmerarm vorgegebene Arbeitsstellung zurück.

Die vom Schwimmer 36 unabhängige Aufwärtsbewegungsmöglichkeit des Segmentes 28 wird im Fall von nicht selbsttätig freispülbaren Verstopfungen zum kurzzeitigen Hochziehen des Segmentes 28 mittels einer hand- oder servobetätigten Zugeinrichtung benutzt. Zu diesem Zweck ist durch die Deckwand des Glockengehäuses 56 ein bis zu dessen Unterseite reichendes Rohr 74 abgedichtet hindurchgeführt, das als Führung für einen an das Bogensegment angeschlossenen Seilzug oder eine Stellstange 72 dient.

**Patentansprüche**

1. Abflußregelvorrichtung für gleichmäßige Abflußmengen aus einem Speicherbecken, mit einem vor einer Abflußöffnung im Becken verstellbaren Drosselorgan in Form eines Bogensegmentes (28), das mit einem Schwimmerarm (34) eines der Stauhöhe folgenden Schwimmers (36) in Antriebsverbindung steht, wobei das Bogensegment (28) und der Schwimmerarm im Bogenkrümmungsmittelpunkt auf einer gemeinsamen waagerechten Achse (26) an einem Gestell (18) gelagert sind und der Abflußöffnungsumfang durch einen sich mindestens bis zum Verstellweg des Bogensegmentes erstreckenden rechteckigen, am Gestell festen Mantel (16) begrenzt ist,
   **dadurch gekennzeichnet,**

   daß der Schwimmer (36) der Stauhöhe folgt, die sich in einem ausschließlich nach unten offenen Glockengehäuse (56), welches die Vorrichtung überdeckt, in verkleinertem, nichtlinearem Maßstab einstellt,
   und daß in einem dem Verstellbereich des Bogensegmentes (28) für kleine Öffnungsquerschnitte entsprechenden Wegabschnitt des Schwimmers eine Federeinrichtung (62) vorgesehen ist, deren Kennlinie der Schwimmerauftriebskraft entgegenwirkend stufenlos überlagert ist.

2. Abflußregelvorrichtung nach Anspruch 1, dadurch gekennzeichnet, daß das Gestell (18) einen mit seinem unteren Bereich an der Beckenwand befestigbaren Hauptrahmen (20) aufweist, der mit dem Mantel (16), mit Tragarmen (24) für die waagerechte Achse (26) sowie einem Haltearm (64) für die daran verstellbare Federeinrichtung (62) in fester Verbindung steht, wobei eine Seitenwand (60) des die Vorrichtung überdeckenden Glockengehäuses (56) in einem zwischen Beckenwand und Hauptrahmen vorgesehenen Abstand aufgenommen ist.

3. Abflußregelvorrichtung nach Anspruch 1 oder 2, dadurch gekennzeichnet, daß eine oder mehrere Seitenwände des Glockengehäuses (56), ausgehend von seiner offenen Unterseite, zur Vertikalen einwärts und/oder auswärts geneigt sind.

4. Abflußregelvorrichtung nach einem der vorhergehenden Ansprüche, dadurch gekennzeichnet, daß eine Seitenwand des Glockengehäuses (56) eine von der Unterkante ausgehenden Ausschnitt enthält, dessen Höhe durch eine abgedichtete, vertikal verstellbare Abdeckplatte veränderbar ist.

5. Abflußregelvorrichtung nach einem der vorhergehenden Ansprüche, dadurch gekennzeichnet, daß das Bogensegment (28) und der Schwimmer (36) aus einer durch ihr Eigengewicht und gegenseitig wirksame, insbesondere verstellbare Anschlagmittel (46, 48) bestimmten Relativstellung, in der sie sich bezüglich der oberhalb der Mantelhöhe angeordneten gemeinsamen Achse (26) nach im wesentlichen entgegengesetzten Richtungen erstrecken, entgegen ihrer jeweiligen Schwerkraftrichtung voneinander unabhängig verschwenkbar sind.

6. Abflußregelvorrichtung nach einem der vorhergehenden Ansprüche, dadurch gekennzeichnet, daß die gemeinsame Achse (26) höhenverstellbar, insbesondere in einem am Gestell (18, 24) höhenverstellbaren Lagergehäuse gelagert ist.

7. Abflußregelvorrichtung nach Anspruch 5, dadurch gekennzeichnet, daß die Deckwand des Glockengehäuses (56) ein bis zu dessen Unterseite reichendes, abgedichtet hindurchgeführtes Rohr (74) als Führung für einen Seilzug oder eine Stellstange zum Hochziehen/Öffnen des Bogensegmentes (28) enthält.

8. Abflußregelvorrichtung nach einem der vorhergehenden Ansprüche, dadurch gekennzeichnet, daß die Federeinrichtung (62) eine mit ihrem freien Ende im Weg des Schwimmers angeordnete Blattfeder (62) ist, deren freie Länge, Richtung und Höhenlage an einem am Gestell (18) festen Haltearm (64) einstellbar sind.

9. Abflußregelvorrichtung nach einem der Ansprüche 5 bis 8, dadurch gekennzeichnet, daß an das untere Ende des Bogensegmentes (28) ein allgemein zur Segmentachse gerichteter Segmentrand (70) angeformt oder angeschlossen ist, der bei geringen Öffnungsquerschnitten in einem Winkel von ungefähr 45° zum Beckenboden bzw. Mantelboden verläuft.

10. Abflußregelvorrichtung nach einem der vorhergehenden Ansprüche, dadurch gekennzeichnet, daß die Seitenwände und der Boden des die Abflußöffnung umfangsmäßig begrenzenden Mantels (16) bis über den Verstellweg des Bogensegmentes (28) hinaus ins Becken verlängert sind.

**Claims**

1. A drainage regulating device for constant drainage flows from a storage basin having a throttling device in the form of an elbow segment (28) which can be adjusted prior to a drainage aperture in the basin, which elbow segment (28) is drive-connected to a float arm (34) of a float (36) following the rise level, with the elbow segment (28) and the float arm being supported at the elbow bend centre on a common horizontal axle (26) on a frame (18) and the drainage aperture circumference being limited by a rectangular jacket (16) secured to the frame and extending at least to the adjustment path of the elbow segment,
**characterised in that**

the float (36) follows the rise level, which settles in a non-linear, scaled-down manner in a bell-shaped housing (56) open only to the bottom which covers the device,
and that in a path section of the float corresponding to the adjustment range of the elbow segment (28) for small aperture cross-sections, a spring apparatus (62) is provided whose characteristic is infinitely superimposed on the float buoyancy force while acting in the opposite direction.

2. A drainage regulating device in accordance with claim 1, wherein the frame (18) comprises a main frame (20) mountable on the basin wall with its lower region and which is rigidly connected to the jacket (16), to support arms (24) for the horizontal axle (26) and a retaining arm (64) for the spring apparatus (62) adjustable thereon, with a side wall (60) of the bell-shaped housing (56) covering the device being housed at a distance provided between the basin wall and the main frame.

3. A drainage regulating device in accordance with either of claims 1 or 2, wherein one or more side walls of the bell-shaped housing (56) are inclined inwards and/or outwards with respect to the vertical beginning from its open bottom side.

4. A drainage regulating device in accordance with any of the preceding claims, wherein one side wall of the bell-shaped housing (56) contains a section beginning from the bottom edge whose height can be changed by a sealed, vertically adjustable masking plate.

5. A drainage regulating device in accordance with any of the preceding claims, wherein the elbow segment (28) and the float (36) can be swivelled independently of each other contrary to their relevant direction of gravity out of the relative positions determined by their own weights and mutually effective, in particular adjustable stop means (46, 48) in which positions they extend in essentially opposite directions with respect to the common axle (26) disposed above the jacket height.

6. A drainage regulating device in accordance with any of the preceding claims, wherein the common axle (6) is supported in a vertically adjustable manner, in particular in a bearing housing vertically adjustable on the frame (18, 24).

7. A drainage regulating device in accordance with claim 5, wherein the top wall of the bell-shaped housing (56) contains a pipe (74) extending to its bottom side and led through in a sealed manner as a guide for a cable control or a control rod to pull up/open the elbow segment (28).

8. A drainage regulating device in accordance with any of the preceding claims wherein the spring apparatus (62) is a spring leaf disposed with its free end in the path of the float whose free length, direction and vertical position can be adjusted at a retaining arm (64) fixed to the frame (18).

9. A drainage regulating device in accordance with any of claims 5 to 8, wherein there is shaped or connected to the lower end of the elbow segment (28) a segment rim (70) generally directed towards the segment axis which runs at an angle of around 45° to the basin bottom or jacket bottom with low aperture cross-sections.

10. A drainage regulating device in accordance with any of the preceding claims wherein the side walls and the bottom of the jacket (16) limiting the drainage aperture at its circumference are extended up to beyond the adjustment path of the elbow segment (28) into the basin.

**Revendications**

1. Dispositif de réglage de l'écoulement pour des débits d'écoulement réguliers sortant d'un bassin d'accumulation, comprenant un organe de réglage en forme de segment d'arc (28) qui peut être mis en mouvement devant une ouverture d'écoulement ménagée dans le bassin, et qui est en liaison cinématique avec un bras de flotteur (34) appartenant à un flotteur (36) qui accompagne le niveau, le segment d'arc (28) et le bras de flotteur étant montés rotatifs sur un bâti (18), au centre de courbure de l'arc, sur un axe horizontal commun (26), et le périmètre de l'ouverture d'écoulement étant limité par une paroi rectangulaire (16) solidaire du bâti, qui s'étend au moins jusqu'à la trajectoire de réglage du segment d'arc,
caractérisé

en ce que le flotteur (36) accompagne le niveau qui s'établit à une échelle réduite, non linéaire, dans une caisse (56) en forme de cloche, ouverte uniquement vers le bas, qui recouvre le dispositif,
et en ce que, dans un segment de la course du flotteur qui correspond à la zone de réglage du segment d'arc (28) pour les petites sections d'ouverture, il est prévu un dispositif à ressort (62) dont la caractéristique se superpose à la poussée hydrostatique du flotteur en sens inverse et par variation continue.

2. Dispositif de réglage de l'écoulement selon la revendication 1, caractérisé en ce que le bâti (18) présente un châssis principal (20) qui peut être fixé à la paroi du bassin par sa région inférieure, qui est relié rigidement à la paroi (16), aux bras porteurs (24) qui portent l'axe horizontal (26) et à un bras support (64) pour le dispositif à ressort (62) qui peut être réglé sur ce bras, cependant qu'une paroi latérale (60) de la caisse en forme de cloche (56) qui recouvre le dispositif est logée dans un espace d'écartement entre la paroi du bassin et le châssis principal.

3. Dispositif de réglage de l'écoulement selon la revendication 1 ou 2, caractérisé en ce qu'une ou plusieurs parois latérales de la caisse en forme de cloche (56) sont inclinées vers l'intérieur et/ou vers l'extérieur par rapport à la verticale en partant du côté inférieur ouvert de cette caisse.

4. Dispositif de réglage de l'écoulement selon une des revendications précédentes, caractérisé en ce qu'une paroi latérale de la caisse en forme de cloche (56) présente une encoche partant du côté inférieur, dont la hauteur peut être modifiée par une plaque de fermeture montée à joint étanche et qui peut être réglée dans la direction verticale.

5. Dispositif de réglage de l'écoulement selon une des revendications précédentes, caractérisé en ce que le segment d'arc (28) et le flotteur (36) peuvent se déplacer par pivotement indépendamment l'un de l'autre, en sens inverse de leur force de gravité, à partir d'une position relative déterminée par leur propre poids et par des moyens de butée (46, 48), notamment réglables, coopérant entre eux, position dans laquelle ils s'étendent dans des directions sensiblement opposées par rapport à l'axe commun (26) disposé au-dessus du niveau de la paroi.

6. Dispositif de réglage de l'écoulement selon une des revendications précédentes, caractérisé en ce que l'axe commun (26) est tourillonné dans une position réglable en hauteur, en particulier dans un boîtier de palier réglable en hauteur sur le bâti (18, 24).

7. Dispositif de réglage de l'écoulement selon la revendication 5, caractérisé en ce que la paroi de plafond de la caisse en forme de cloche (56) renferme un tube (74) se prolongeant jusqu'à son côté inférieur, enfilé à joint étanche à travers cette paroi, et servant de guide pour une transmission à câble ou pour une tige de réglage servant à relever/ouvrir le segment d'arc (28).

8. Dispositif de réglage de l'écoulement selon une des revendications précédentes, caractérisé en ce que le dispositif à ressort (62) est un ressort à lame (62) dont l'extrémité libre est disposée sur le trajet du flotteur et dont la longueur libre, la direction et la position en hauteur peuvent être réglées sur un bras support (64) solidaire du bâti (18).

9. Dispositif de réglage de l'écoulement selon une des revendications 5 à 8, caractérisé en ce qu'à l'extrémité inférieure du segment d'arc (28) est venu de matière ou fixé un rebord de segment (70) dirigé sensiblement vers l'axe du segment et qui, aux petites sections d'ouverture, forme un angle d'environ 45° avec le fond du bassin ou avec le fond de la paroi.

10. Dispositif de réglage de l'écoulement selon une des revendications précédentes, caractérisé en ce que les parois latérales et le fond de la paroi (16) qui limite l'ouverture d'écoulement sur son périmètre sont prolongés dans le bassin jusqu'au-delà de la trajectoire de réglage du segment d'arc (28).

Fig. 1

Fig.5

Fig. 2

Fig. 3

Fig. 4

EP 0 799 631 B1